# EUROPEAN PATENT APPLICATION

(11) **EP 0 942 479 A1**
(43) Date of publication of application: **15.09.1999**
(21) Application number: 99301768.0
(22) Date of filing: 10.03.1999
(51) Int. Cl.: H01M 2/12

(54) **Electric storage battery with a gas-venting system incorporated in the cover**

(30) Priority: 13.03.1998 GB 9805242
(71) Applicant: Yuasa Automotive Batteries (Europe) Ltd., Sparkhill, Birmingham B11 3DA (GB)
(72) Inventor: Peters, David John, Stourbridge, West Midlands DY9 7AZ (GB); Rose Alan Michael, Redditch, Worcestershire B98 7YR (GB)
(74) Representative: Carpenter, David

(57) **Abstract**

An electric storage battery comprising a plurality of cells, each cell having a respective gas vent path including a primary condensation chamber (17) and a secondary trap chamber (18) through which gas must flow to reach a vent outlet (29) of the battery, each trap chamber (18) being positioned downstream of its respective primary condensation chamber (17) so that gas venting from a cell must pass through the primary chamber (17) to reach the trap chamber (18). Each trap chamber (18) is associated with its respective condensation chamber (17) such that electrolyte collecting in the trap chamber (18) can drain only into each respective condensation chamber (17) for return to each respective cell, the trap chambers (18) being defined within a common gallery by upstanding walls (27) dividing the gallery into a plurality of trap chambers (18) communicating with each other and the battery vent outlet (29) through vent apertures above the dividing walls (27).

## Description

The present invention relates to an electric storage battery, primarily but not exclusively, a starting, lighting and ignition battery (SLI battery) for a road vehicle.

It is known that in certain operating conditions of an SLI battery, either as a result of mechanical agitation for example by vibration, or as a result of chemical action within the battery cells, electrolyte vapour and/or droplets may be entrained with the gas generated in a battery cell with a risk of such acid vapour or droplets issuing with the gas venting from the cell. An SLI battery generally has six cells side-by-side, and conventionally all six cells will vent gas through individual vents or a common vent outlet, or respective individual outlets, of the battery. Another alternative is for the battery to have a vent outlet at each end of the battery, and for the cells to be grouped in two sets of three adjacent cells, with each set venting through a respective one of the two vent outlets.

It is known, for example from European Patent No 0570703, for each cell to vent into a respective condensation chamber containing baffles or other structures defining a labyrinthine gas flow path within the chamber encouraging vapour or gas droplets to condense from the gas flow and to collect within the chamber, there being a drain route for collected electrolyte to drain back from the chamber into the respective cell. The teaching in European Patent No 0570703 is that each of the condensation chambers shall open into a common gallery 16 which in turn vents into a common gallery 17 communicating with the casing vent outlet. The arrangement disclosed in European Patent No 0570703 is such that any electrolyte which collects in the galleries 16 and 17 as a result of condensation or coalescence of electrolyte vapour and droplets, can drain back into the cells of the battery, but will not necessarily drain back into the cell from which the electrolyte was derived. There is therefore a risk that electrolyte collecting in the galleries 16 and 17 will drain back preferentially into certain cells leading to undesirable depletion of electrolyte in other cells. It is an object of the present invention to provide an electric storage battery wherein the aforementioned problem is obviated or minimised.

In accordance with the present invention there is provided an electric storage battery including a plurality of cells, each cell having a respective gas vent path including a primary condensation chamber and a secondary trap chamber through which gas must flow to reach a vent outlet of the battery, each trap chamber being positioned downstream of its respective primary condensation chamber so that gas venting from a cell must pass through the primary chamber to reach the trap chamber, and each trap chamber being associated with its respective condensation chamber such that electrolyte collecting in the trap chamber can drain only into each respective condensation chamber for return to each respective cell, said trap chambers being defined within a common gallery by upstanding walls dividing the gallery into a plurality of trap chambers communicating with each other and the battery vent outlet through vent apertures above the dividing walls.

One example of the invention is illustrated in the accompanying drawings wherein:-
Figure 1 is a plan view of the lid of an SLI battery with a cover of the lid removed;
Figure 2 is a perspective view of the lid illustrated in Figure 1;
Figure 3 is a sectional perspective view of a battery including a lid of Figures 1 and 2 with the cover removed;
Figure 4 is a perspective view of the underside of the lid cover omitted from Figures 1, 2 and 3;
Figure 5 is a sectional view of part of a modified lid , and;
Figure 6 is an enlarged perspective representation of part of the lid seen in Figure 5.

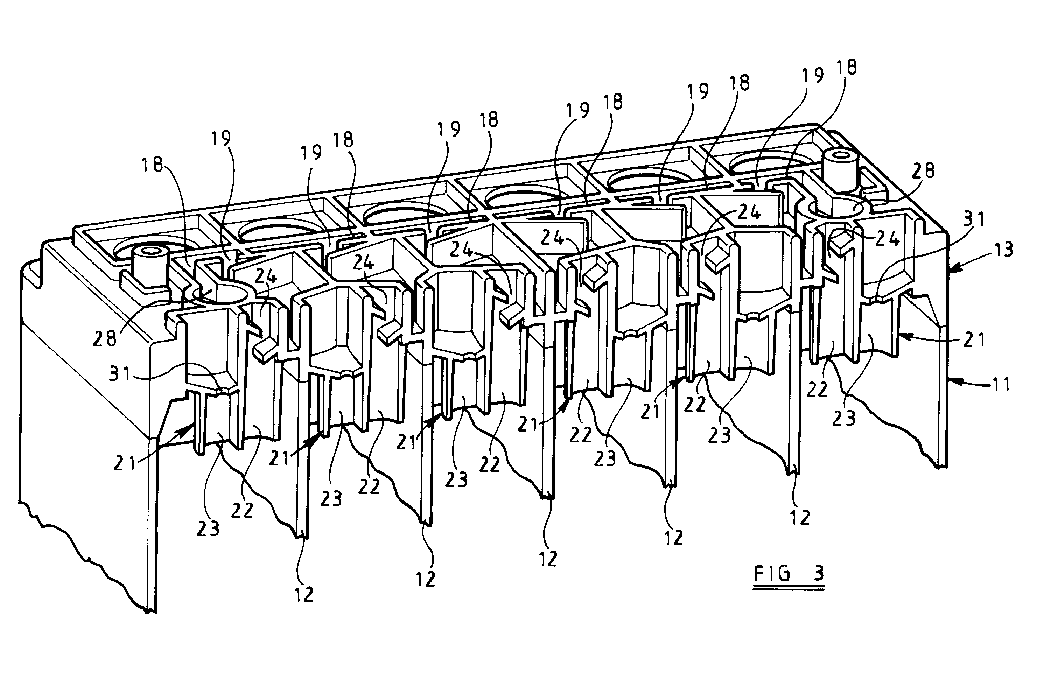

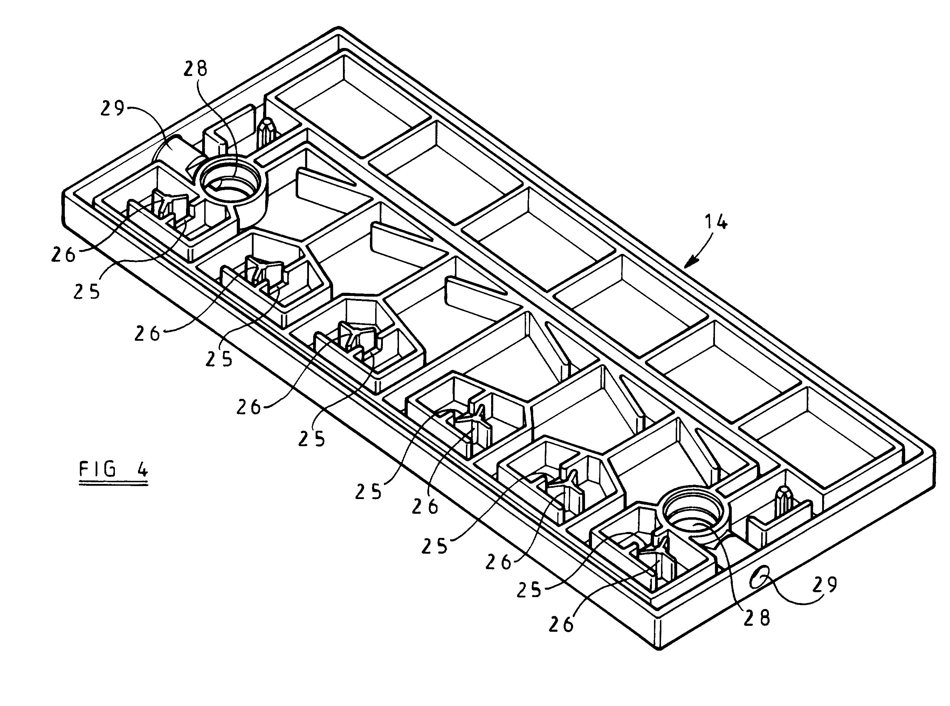

Referring to the drawings the battery, which is intended as starting, lighting and ignition (SLI) for a road vehicle has a moulded synthetic resin, conveniently polypropylene, case within which battery plate packs and electrolyte are received in known manner. The case comprises a moulded, open topped box 11 (Figure 3) divided internally by five integral parallel partition walls 12 to define six parallel, cell receiving compartments. The open, upper end of the boxes closed in use by a moulded synthetic resin, conveniently polypropylene, lid 13 which includes a separately moulded cover 14 (Figure 4) of the same, or a compatible, synthetic resin material. In use the cover 14 is welded or adhesively secured to the lid moulding 13 and the lid moulding 13 is welded or adhesively secured to the top of the battery box 11, the undersurface of the lid having formations which engage the tops both of the partition walls 12 and the peripheral wall of the box 11. Battery plate packs defining cells are received in each of the six compartments of the battery respectively, and are electrically interconnected by connectors passing through the partition walls. The battery plate packs in the two opposite end compartments are, in known manner, electrically connected to positive and negative terminals 15, 16 protruding upwardly through the lid moulding 13 to be accessible at the exterior of the battery. The battery plate packs in each of the compartments are immersed in electrolyte in known manner subsequent to gas leak testing of the battery case integrity, the electrolyte being introduced into the compartments in known manner prior to securing the cover 14 to the lid moulding 13.

The lid moulding 13 and cover moulding 14 define between them labyrinthine vent paths for each of the six cell compartments respectively. The vent path associated with each cell compartment comprises, within the combined mouldings 13, 14, a primary condensation chamber 17 and a secondary, trap chamber 18. The upper surface of the lid moulding 13 defines a floor of each of the chambers 17, 18, the floors being inclined such that liquid electrolyte collecting in a trap chamber 18 will flow back under gravity into each respective condensation chamber 17, and from the condensation chamber 17 back into the respective cell compartment. The mouldings 13, 14 have respectively upstanding walls which are welded or adhesively secured together to define the chambers between the upper surface of the moulding 13 and the undersurface of the cover 14. An aperture 19 in the wall separating each chamber 17 from each respective chamber 18 extends down to the floors of the chambers so as to provide a drain path from each chamber 18 into its respective chamber 17.

Extending downwardly from the undersurface of the lid moulding 13 into each compartment of the battery, is a tubular element 21 integral with the lid moulding. Each of the six tubular elements 21 is divided internally by an integral, longitudinally extending web to define a vent tube 22 and a parallel drain tube 23 within each element 21. The tubes 22, 23 open through the moulding 13 so as to communicate with their respective primary condensation chamber 17. An opening in the form of a longitudinal slot 22a is formed in the wall of the vent tube 22 to allow gas/vapour from the head space above the electrolyte in the cell to enter the vent tube.

As best seen in Figure 3 each vent tube 22 contains, at its upper end, integral inclined baffles 24 which deflect gases and liquid flowing upwardly through the tube 22 from the battery compartment and so act as a first means of retaining electrolyte droplets entrained with the gas flow from each compartment. Large droplets tend to impact on the baffles 24 and coalesce thereon, so as to drip back from the baffles down through the respective tube 22 and into the respective cell compartment. Gas flowing beyond the baffles may still carry electrolyte vapour or droplets with it but the only flow path for gas from the upper end of the tube 22 between the mouldings 13, 14, is laterally within the respective condensation chamber 17 across the top end of the respective drain tube 23 by way of a cut-out 25 (Figure 4) in an internal wall structure of the cover 14. Fins 26 of a downwardly extending spigot of the cover 14 further obstruct the gas flow at the top of each drain tube 23, and form further baffle surfaces upon which electrolyte droplets can coalesce. Gas flowing beyond the upper end of each tube 23 must then flow through the whole of its respective chamber 17 to reach the aperture 19 through which each chamber 17 communicates with its respective trap chamber 18. It will be recognised that the close proximity of the tubes 22 and 23 and the flow path from the tube 22 across the top of the tube 23, is very advantageous in that any electrolyte "pumped" up a tube 22 by gas or mechanical agitation will flow back into the compartment immediately by way an aperture 31 in the floor of the chamber 17 and the respective adjacent tube 23.

It can be seen in the drawings that the vent path from the upper end of each tube 23 into the respective chamber 17 includes a number of right-angle bends defined by walls of the lid moulding 13 and cover moulding 14. The floor of the path however inclines from each chamber 17 through the right-angle bends and back to the top of each respective tube 23 so that liquid electrolyte collecting in a chamber 17 can drain back through each respective tube 23 into the respective cell compartment.

The drawings illustrate a single baffle 17a in the flow path which gas must take when passing through a chamber 17 to a respective chamber 18. It is to be understood however that the labyrinthine nature of the gas flow path can be increased by the provision of further baffles or the like within each chamber 17 to provide surfaces against which the gas flow impacts, and upon which entrained electrolyte can condense or coalesce to drip back to the floor of the chamber 17 to drain through the respective tube 23 into the respective cell compartment.

As is apparent from the drawings the six trap chambers 18 are aligned with one another in a rectilinear row, and extend transversely with respect to the partition walls 12 of the battery case. With the exception of the chambers 18 associated with the two cell compartments at opposite ends of the battery, the length of each of the trap chambers 18 is equal to the width of the respective cell compartment underlying it. In a sense the rectilinear arrangement of the trap chambers 18 can be considered to be a gallery extending lengthwise of the combined lid and cover mouldings and divided internally by transverse walls 27 of the lid moulding 13 to define individual trap chambers 18. However, the upwardly extending dividing walls 27 of the lid moulding 13 have no counterparts in the cover moulding 14 and thus the head space of each of the trap chambers 18 communicates with the head space of the next adjacent chamber 18 over the top of the respective dividing wall 27.

The two trap chambers 18 associated with the opposite end cell compartments respectively of the battery each communicate with a respective battery vent assembly 28 in the combined cover and lid mouldings. Each vent assembly 28 including a gas permeable ceramic frit or other flame trap device of known form through which the vent gas must pass to reach a vent aperture 29 on the exterior of the cover moulding 14.

It will be recognised therefore that gas passing through each respective aperture 19 into each respective trap chamber 18 will then flow lengthwise of the battery over the tops of the walls 27 and through a respective vent assembly 28 to a vent aperture 29. Notionally the three cells at one end of the battery will vent through the vent assembly 28 at that end of the battery while the three cells at the opposite end of the battery will vent through their respective assembly 28. It is to be understood however that if desired only a single vent assembly 28 need be provided, in which case gas from all cells will flow in the same direction through the head spaces of the chambers 18 to reach the single vent. Alternatively, the wall 27 separating the third and fourth chambers 18 can have a counterpart in the cover moulding 14 such that the chambers 18 of the first, second and third cell compartments are interlinked but are separate from the interlinked chambers 18 of the fourth, fifth and sixth cell compartments.

It will be recognised that the trap chambers 18 are relatively deep and communicate with one another only by their head spaces. Any electrolyte which collects within a chamber 18 will thus be prevented by the walls 27 from flowing into the next adjacent chamber 18 and will drain back through its respective chamber 17. Using such an arrangement it is possible to provide a relatively restriction-free vent path, which will not generate any significant back-pressure in the vent path, while at the same time ensuring there is little or no risk of liquid electrolyte being transferred from one cell to another by the venting gases.

In the event that the battery is tipped onto its side, or onto an end then a certain amount of electrolyte may flow through the tubes 22 and/or 23 into the respective chamber 17. However, the dimensions of the chambers 17 and the positioning of the tubes 22 and 23 are such that irrespective of whether the battery is tipped onto a side, or onto an end there will not be a route by which sufficient air can flow back into the cell compartments to drain the compartments, and thus an airlock is formed in relation to each cell compartment such that the amount of electrolyte which can drain from a compartment in such circumstances is restricted to that which can be accommodated by the respective chamber 17. In this manner a flow of liquid electrolyte through the outlet assemblies 28 is prevented. Any electrolyte which may find its way into a trap chamber 18 in such circumstances will of course flow back into each respective chamber 17 when the battery is restored to its upright position, and will not therefore migrate into other cells.

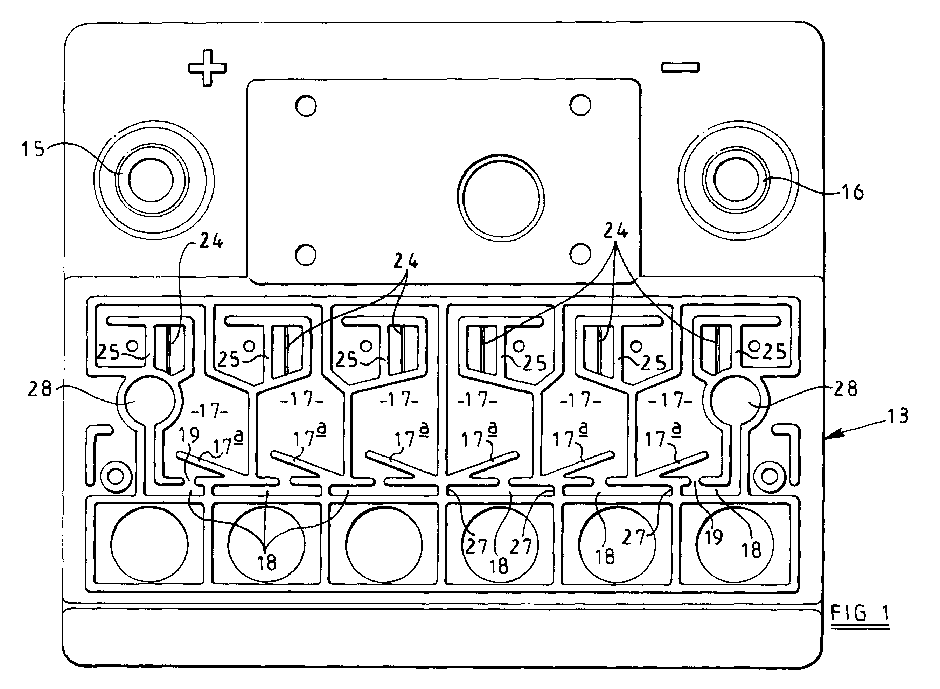

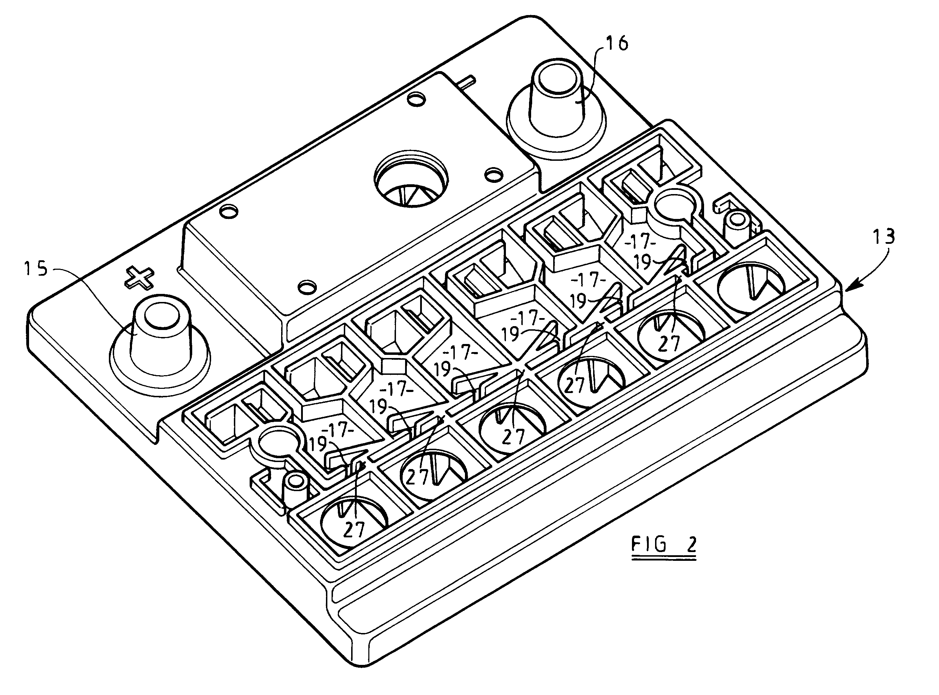

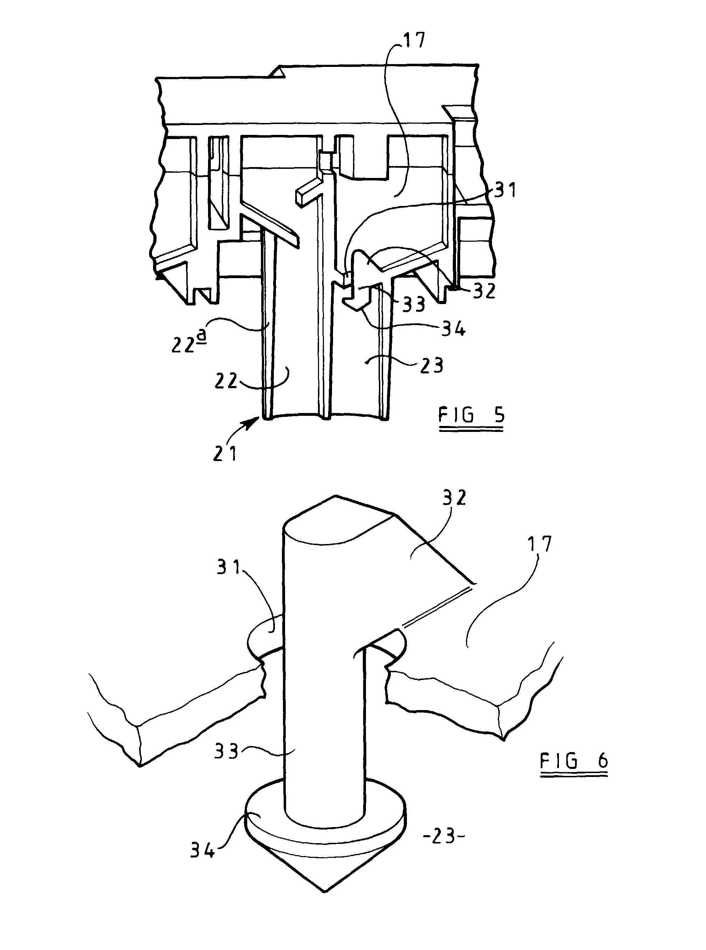

Turning now to the modification illustrated in Figures 5 and 6, the arrangement within each drain tube 23 is modified to assist drainage. In the arrangement described above with reference to Figures 1 to 4 it will be recalled that liquid condensing in the gas flow path between a vent tube 22 and the exterior of the battery will drain back into its respective cell by way of the respective drain tube 23. The connection between each chamber 17 and its respective drain tube 23 is by way of a circular aperture 31 in the floor of the chamber 17. The modification illustrated in Figures 5 and 6 seeks to minimise the risk of the circular aperture in the floor of the chamber 17 becoming blocked in use by surface tension effects, as might arise for example by an electrolyte drop which has not detached itself from the periphery of the aperture, or by an electrolyte film in the form of a bubble.

In Figures 5 and 6 the aperture in the floor of the chamber 17 through which electrolyte drains back in to the respective drain tube 23 is illustrated at 31. Moulded integrally with the floor of each chamber 17 and projecting above each respective aperture 31 within the respective chamber 17, is a bracket 32 having a post 33 of circular cross-section formed integrally therewith. Each post 33 extends coaxially, downwardly through the respective aperture 31 to terminate within the respective drain tube 23. Beneath the floor of the respective chamber 17 each post 33 is formed with a generally domed or conical head 34 the circular base of which is presented upwardly towards the under surface of the floor of the respective chamber 17 and the diameter of which is substantially equal to the diameter of the respective aperture 31. The apex, or dome of each head 34 thus extends downwardly within the respective drain tube 23 to form a drip-point assisting the detachment of electrolyte droplets from the post 33 and head 34 to fall under gravity back into the respective battery cell compartment.

It will be recognised that there is an annular passage or clearance defined between the post 33 and the wall of the respective aperture 31 through which electrolyte collecting within the chamber 17 can drain. The capillary action which is generated within the annular clearance between each post 33 and its respective aperture wall 31 draws electrolyte towards the respective head 34 and the shaping of the head 34 assists drop formation and release, the post 33 and its head 34 thus improving the efficiency of electrolyte transfer through the aperture 31 back into the respective cell compartment. Furthermore, the head 34, being of a diameter corresponding to the diameter of the respective aperture 31, but spaced below the respective aperture 31, acts as a baffle greatly minimising the risk of splashes of electrolyte from the associated cell compartment passing upwardly through the drain tube 23 and the aperture 31.

## Claims

1. An electric storage battery comprising:
a plurality of cells, each cell having a respective gas vent path including a primary condensation chamber (17) and a secondary trap chamber (18) through which gas must flow to reach a vent outlet (29) of the battery,
each trap chamber (18) being positioned downstream of its respective primary condensation chamber (17) so that gas venting from a cell must pass through the primary chamber (17) to reach the trap chamber (18), and
characterised in that each trap chamber (18) is associated with its respective condensation chamber (17) such that electrolyte collecting in the trap chamber (18) can drain only into each respective condensation chamber (17) for return to each respective cell, the trap chambers (18) being defined within a common gallery by upstanding walls (27) dividing the gallery into a plurality of trap chambers (18) communicating with each other and the battery vent outlet (29) through vent apertures above the dividing walls (27).

2. Apparatus as claimed in Claim 1, each cell having an associated vent tube (22) through which gas vents from the cell into the respective condensation chamber (17).

3. Apparatus as claimed in Claim 2, wherein each vent tube (22) comprises deflection means (24) for deflecting gases and liquid flowing upwardly through the vent tube (22).

4. Apparatus as claimed in Claim 3, wherein the deflection means comprise one or more baffle (24) arranged to intercept the gas flow from the vent tube (22).

5. Apparatus as claimed in any one of Claims 1 to 4, each cell having an associated drain tube (23), in communication with the respective condensation chamber (17), through which electrolyte collecting in the condensation chamber (17) drains back into the respective cell.

6. Apparatus as claimed in Claim 5, wherein the vent tube (22) and the drain tube (23) associated with each cell are arranged in close proximity to minimise the flow path of electrolyte between the vent tube (22) and the drain tube (23).

7. Apparatus as claimed in Claim 5 or 6, wherein each condensation chamber communicates with the respective drain tube (23) by means of an aperture (31) in the floor of the condensation chamber (17).

8. Apparatus as claimed in Claim 7, wherein each chamber (1 7) includes a member (33) extending downwardly through the aperture (31) and terminating within the respective drain tube (23), the member (33) and the respective aperture (31) defining a clearance through which electrolyte collecting within the chamber (17) can drain.

9. Apparatus as claimed in Claim 8, wherein the member (33) comprises an enlarged head (34) providing a drop-point for assisting detachment of electrolyte droplets into the cell.

10. Apparatus as claimed in Claim 9, wherein the head (34) is of domed or conical form, the base of the head (34) having a diameter corresponding to the diameter of the respective aperture (31).
